# EUROPÄISCHE PATENTSCHRIFT

(11) **EP 0 893 755 B1**
(45) Veröffentlichungstag und Bekanntmachung des Hinweises auf die Patenterteilung: **06.05.2004**
(21) Anmeldenummer: 98112799.6
(22) Anmeldetag: 09.07.1998
(51) Int. Cl.: G06F 5/06

(54) **Pufferspeicheranordnung**
Buffer storage device
Dispositif de mémoire tampon

(30) Priorität: 21.07.1997 DE 19731204
(43) Veröffentlichungstag der Anmeldung: 27.01.1999
(73) Patentinhaber: Infineon Technologies AG, 81669 München (DE)
(72) Erfinder: Barrenscheen, Jens, 81669 München (DE); Huch, Martin, Dr., 81739 München (DE); Fenzl, Gunther, 85635 Höhenkirchen-Siegertsbrunn (DE)
(74) Vertreter: Jannig, Peter, Dipl.-Ing.

(56) Entgegenhaltungen:
- EP-A- 0 493 834
- EP-A- 0 530 363
- "MEMORY ARCHITECTURE SUPPORTING TWO 8-BIT/PEL IMAGES OR ONE 16-BIT/PEL IMAGE" IBM TECHNICAL DISCLOSURE BULLETIN,US,IBM CORP. NEW YORK, Bd. 32, Nr. 4B, Seite 131-134 XP000067041 ISSN: 0018-8689
- OLSON T: "VARIABLE-WIDTH FIFO BUFFER SEQUENCES LARGE DATA WORDS" ELECTRONIC DESIGN,US,PENTON PUBLISHING, CLEVELAND, OH, Bd. 35, Nr. 14, Seite 117-120,122 XP000022981 ISSN: 0013-4872

## Beschreibung

Die Erfindung betrifft eine Pufferspeicheranordnung gemäß dem Oberbegriff des Anspruchs 1.

Als Pufferspeicher werden häufig First-In-First-Out-Speicher (FIFO) verwendet. Die Realisierung eines derartigen FIFO's ist beispielsweise in Tietze/Schenk, 9. Auflage, 1990, Seiten 285 bis 288 beschrieben.

Ein FIFO ist eine besondere Form eines Schieberegisters. Das gemeinsame Merkmal ist hier, daß die Daten in derselben Reihenfolge am Ausgang erscheinen, wie sie am Eingang eingegeben wurden: das zuerst eingelesene Wort (First-In) wird also auch wieder zuerst ausgelesen (First-Out). Im Unterschied zu einem Schieberegister kann bei einem FIFO dieser Vorgang jedoch völlig asynchron erfolgen, d.h. der Auslesetakt ist dann vom Einlesetakt entkoppelt.

Bei modernen FIFO's werden die Daten nicht mehr verschoben, sondern über zwei Zeiger, dem sogenannten Schreibzeiger und dem Lesezeiger, werden Eingabe- bzw. Ausgabeadressen in einem Speicherbaustein angegeben. Der Schreibzeiger zeigt dabei auf die erste freie Adresse, während der Lesezeiger auf die letzte belegte Adresse zeigt. Die Zeiger sind dabei üblicherweise durch einfache Zähler realisiert. Der Speicherbaustein ist typischerweise ein Random-Access-Memory-Speicher (RAM).

Ein weiteres FIFO ist in der DE 44 33 692 A1 insbesondere dort in Figur 1, beschrieben. Figur 1 der vorliegenden Erfindung zeigt ein solches FIFO, bei dem ein Ausschnitt eines Speicherbereichs, der beispielsweise in eine Random-Access-Memory (RAM) angeordnet sein kann, abgebildet ist. Der adressierte Speicherbereich umfaßt hier die Adressen 22, 23,...31. In Figur la sind die Datenwörter D1 - D4 in die Speicherplätze mit den Adressen 24, 25, 26 und 27 eingeschrieben. Der Lesezeiger RP zeigt auf den Speicherplatz mit der Adresse 24 und der Schreibzeiger WP auf den Speicherplatz mit der Adresse 28.

Sollen nun zwei weitere Datenwörter in die Warteschlange (D5 und D6) eingeschrieben werden, so wird das Datenwort D5 in den Speicherplatz mit der Adresse 28 eingeschrieben und das Datenwort D6 in den Speicherplatz mit der Adresse 29 (Figur 1b). Der Schreibzeiger WP wird um die Anzahl der eingeschriebenen Wörter erhöht. Sollen nun Daten aus den Speicherplätzen gelesen werden, so wird über den Lesezeiger WP auf der Speicherplatz mit der Adresse 24 verwiesen und das Datenwort D1 ausgelesen.

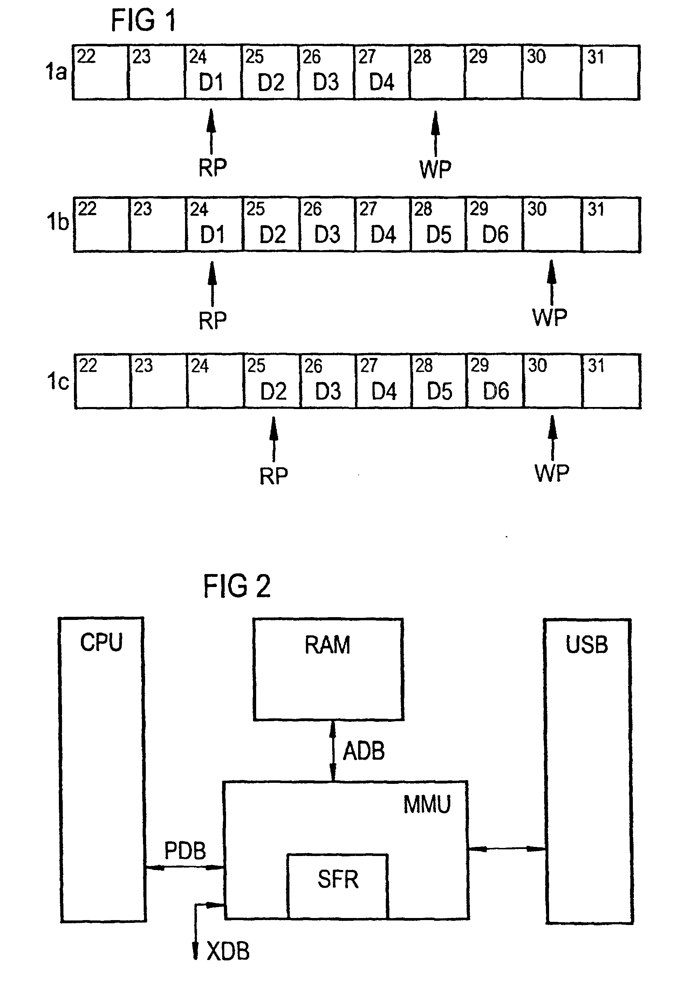

Nach dem Lesevorgang (Figur 1c) zeigt der Lesezeiger WP auf den Speicherplatz mit der Adresse 25 und der Schreibzeiger RP zeigt nach dem Schreibvorgang auf den Speicherplatz mit der Adresse 30. Nach dem Schreib- sowie Lesevorgang besteht der neue Dateninhalt der Warteschlange aus den Datenwörtern D2 - D6. Die Datenwörter sind in aufeinanderfolgenden Speicherplätzen zwischengespeichert.

Nachteil einer derartigen Speicherabarbeitung eines Pufferspeichers ist, daß gerade beschriebene Speicherplätze im Pufferspeicher erst dann ausgelesen werden können, nachdem die zeitlich vor diesem Speicherplatz eingespeicherten Speicherplätze des Pufferspeichers ausgelesen wurden. Dies ist insbesondere dann nachteilig, wenn sich in dem Pufferspeicher immer nur der Dateninhalt einiger weniger Speicherplätze ändert, der Dateninhalt der übrigen Speicherplätze jedoch meist gleich bleibt. Eine derartige Pufferspeicherarchitektur ist somit sehr unflexibel und das Auslesen somit äußerst zeitintensiv.

Häufig entsteht auch folgendes Problem: Der Datensender, beispielsweise der Bus, ist inaktiv. Wird der Bus aktiviert, dann müssen in sehr kurzer Zeit sehr große Datenpakete auf einmal in den Pufferspeicher geschrieben werden. Der Datenempfänger, beispielsweise die zentrale Recheneinheit, weist jedoch häufig eine sehr viel höhere Taktfrequenz als der Datensender auf und kann somit sehr viel schneller Daten aus dem Pufferspeicher auslesen als der Datensender Daten in diesen einschreiben kann. Dadurch wird die Leistungsfähigkeit des Pufferspeichers begrenzt durch die Größe des Pufferspeichers und die Fähigkeit des Datensenders, gleich schnell Datenpakete in den Pufferspeicher zu schreiben, wie diese vom Datenempfänger ausgelesen werden.

Durch eine FIFO-Pufferspeicherarchitektur nach dem Stand der Technik läßt sich jedoch immer nur ein Datenpaket, welches maximal der Größe des Pufferspeichers entspricht, vom Datenempfänger auslesen, bevor der Pufferspeicher wieder von dem Datensender beschrieben werden kann. Diese Abarbeitungsprozedur ist sehr langsam und limitiert zudem die Leistungsfähigkeit des gesamten Systems drastisch.

Um die Leistungsfähigkeit eines Pufferspeichers zu vergrößern, ist es daher notwendig, ein sehr großes Speichermodul (RAM) als Pufferspeicher bereitzustellen, der die zu transferierende Datenmenge vollständig aufnehmen kann. Dies ist jedoch insbesondere bei einem Mikroprozessor überaus kostenintensiv.

Bei den vom Datensender unmittelbar hintereinander gesendeten Datenpaketen ändern sich häufig nur einzelne wenige Daten, während die übrigen Daten gleich bleiben. Dies ist beispielsweise bei einer Datenmaske, einem Datenformular, oder ähnlichem der Fall. Bei einem gattungsgemäßen Pufferspeicher wird jedoch immer die gesamte Datenmenge in den Speicher eingeschrieben und anschließend auch komplett wieder ausgelesen. Dies ist überaus umständlich und dauert zudem sehr lange.

Mit der bestehenden FIFO-Speicherarchitektur ist es ferner nicht möglich, gleichzeitig Daten in den Speicher zu schreiben und aus dem Speicher auszulesen.

Ein weiterer Pufferspeicher ist aus der EP-A-0 530 363 bekannt; dieser Pufferspeicher ist eine Pufferspeicheranordnung gemäß dem Oberbegriff des Anspruchs 1.

Der Erfindung liegt daher die Aufgabe zugrunde, eine flexiblere, leistungsfähige Pufferspeicherarchitektur anzugeben.

Diese Aufgabe wird erfindungsgemäß durch die in Anspruch 1 beanspruchte Pufferspeicheranordnung gelöst.

Mit der erfindungsgemäßen Pufferspeicheranordnung ist es möglich mit einem Standard-Speicher, der typischerweise als einfacher RAM ausgebildet ist, eine gegenüber dem Stand der Technik sehr viel leistungsfähigere Abarbeitungsprozedur von Schreib- und Lesevorgang der Daten zu erzielen. Gegenüber dem Stand der Technik wird hierfür vorteilhafterweise ein sehr viel kleinerer Speicher benötigt, als es die ankommende maximale Datenmenge erfordern würde.

Typischerweise jedoch nicht notwendigerweise sind Datensender und Datenempfänger als zentrale Recheneinheit und als USB-Bus ausgebildet. Die zentrale Recheneinheit und der USB-Bus können dabei wechselweise sowohl als Datensender und als Datenempfänger fungieren.

Die erfindungsgemäße Pufferspeicheranordnung ermöglicht es zudem, daß gleichzeitig vom Datensender Daten in den Speicher geschrieben und vom Datenempfänger Daten aus dem Speicher ausgelesen werden können. Auf diese Weise wird auch die Flexibilität der Pufferspeicherarchitektur erhöht.

Ferner ist es möglich, gezielt einzelne Endpunkte, die beispielsweise mehrere Speicherplätze umfassen können, zu beschreiben bzw. auszulesen, ohne daß sich der Dateninhalt der übrigen Endpunkte ändert. Der Dateninhalt der übrigen Endpunkte muß dann vorteilhafterweise auch nicht ausgelesen werden. Auf diese Weise ist eine Kanalisierung und Strukturierung des Datentransfers möglich. Ferner lassen sich auf diese Weise zu sendenden Daten sehr schnell übertragen.

Besonders vorteilhaft ist die Erfindung, wenn Daten in Form einer Datenmaske, eines Formulars, oder ähnliches übertragen werden sollen, bei dem sich immer nur einzelne Daten verändern. Diese sich jeweils verändernde Daten können dann sehr schnell weitergeleitet werden.

Die einzelnen Endpunkte lassen sich sowohl im sogenannten Single-Buffer-Mode als auch im Dual-Buffer-Mode betreiben. In einer sehr vorteilhaften Anwendung lassen sich ein Teil der Endpunkte im Single-Buffer-Mode betreiben, während der andere Teil der Endpunkte im Dual-Buffer-Mode betrieben wird.

Besonders vorteilhaft ist die Erfindung in einem sogenannten USB-Modul. Der Bus ist dann ein USB-Bus. Der Bus kann jedoch auch einen weiteren Prozessor, einen Coprozessor oder mindestens eine Pheripherieeinrichtung an die Pufferspeicheranordnung anschließen.

Eine weitere günstige Anwendung findet die Pufferspeicheranordnung in einem Mikroprozessor, einem Mikrocomputer oder in einem Kommunikationsnetz.

Vorteilhafte Weiterbildungen der Erfindung sind gegenstand der Unteransprüche.

Nachfolgend wird die Erfindung anhand der in den Figuren der Zeichnung angegebenen Ausführungsbeispiele näher erläutert. Es zeigt dabei:
- Figur 1: eine FIFO-Pufferspeicherverwaltung nach dem Stand der Technik,
- Figur 2: ein Übersichtsblockschaltbild der erfindungsgemäßen Pufferspeichereinrichtung,
- Figur 3: ein detalliertes Blockschaltbild einer erfindungsgemäßen Pufferspeichereinrichtung,
- Figur 4: ein im Dual-Buffer-Mode betriebener Pufferspeicher,
- Figur 5: ein im Single-Buffer-Mode betriebener Pufferspeicher,
- Figur 6: ein sowohl im Dual-Buffer-Mode als auch im SingleBuffer-Mode betriebener Pufferspeicher.

Figur 2 zeigt in einem Übersichtsblockschaltbild die Architektur einer erfindungsgemäßen Pufferspeichereinrichtung. Mit BM ist hier dabei die Pufferspeicheranordnung selbst bezeichnet. Die Pufferspeicheranordnung BM weist einen Speicher RAM auf. Dieser Speicher RAM ist hier als einfacher Random-Access-Memory (RAM) ausgeführt. Jedoch ist es auch denkbar, jeden anderen beschreibbaren Speicher, wie zum Beispiel einen DRAM, einen SRAM, einen FRAM, etc. zu verwenden. Der Speicher RAM kann als RAM-Baustein in diskreter Form vorliegen oder beispielsweise in einem Siliciumchip zusammen mit dem Pufferspeicher monolithisch integriert sein.

Der Speicher RAM ist im vorliegenden Beispiel durch einen einzigen Adress-/Datenbus ADB mit einer Speicherverwaltungseinheit MMU verbunden. Der Adress-/Datenbus ADB weist dabei eine Vielzahl von Adreßleitungen und Datenleitungen auf.

Die Speicherverwaltungseinheit MMU enthält eine Registereinrichtung SFR. Die Registereinrichtung SFR enthält typischerweise ein Adressregister und ein Längenregister. Im Adressregister sind die Adressen der Speicherplätze abgelegt, während im Längenregister die Länge oder die Paketgröße der abgelegten Daten abgespeichert ist.

Der Speicher RAM sowie die Speicherverwaltungseinheit MMU sind zwischen einer zentralen Recheneinheit CPU und einem Bus USB angeordnet. Die zentrale Recheneinheit CPU kann beispielsweise ein Prozessor oder ein Mikroprozessor sein. Der Bus USB ist im vorliegenden Beispiel ein Universal Serial Bus (USB). Jedoch kann als Bus auch jeder andere seriell oder parallel betriebene Bus verwendet werden. Es ist auch denkbar, daß der Bus USB die Schnittstelle zu einer weiteren zentralen Recheneinheit, einem Coprozessor oder mindestens einer Pheripherieeinheit bildet.

Die Speicherverwaltungseinheit MMU ist im vorliegenden Beispiel durch den sogenannten Peripheral Data Bus (PD-Bus/PDB) mit der zentralen Recheneinheit CPU verbunden. Dieser PD-Bus PDB steuert unter anderem auch die Registereinrichtung SFR der Speicherverwaltungseinheit MMU an. Über einen weiteren Bus, dem sogenannten External Data Bus (XDB), sind Pheriepherieeinheiten an die Speicherverwaltungseinheit MMU ankoppelbar.

Die Speicherverwaltungseinheit MMU ist außerdem über eine Vielzahl von Signalleitungen mit dem Bus USB verbunden. Diese Signalleitungen bestehen aus Adressleitungen, Datenleitungen und Steuerleitungen. Die Daten auf den Daten- und Adressleitungen können in gemultiplexter oder nicht-gemultiplexter Form vorliegen.

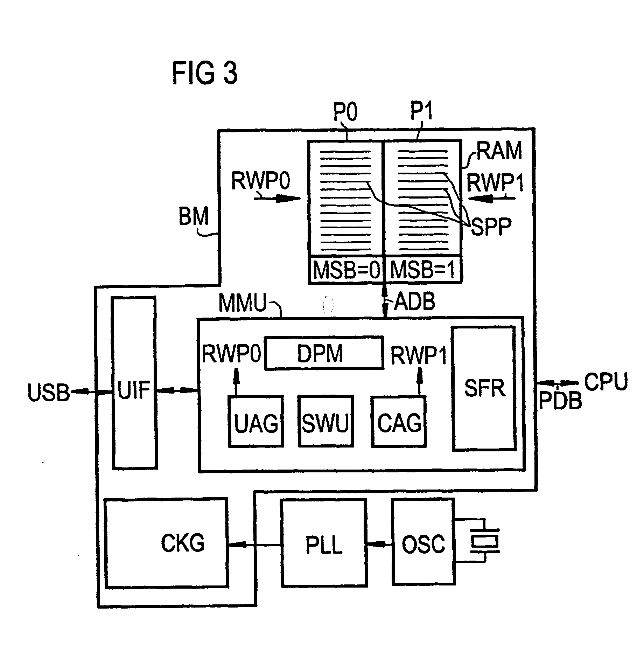

Figur 3 zeigt ein detailliertes Blockschaltbild der erfindungsgemäßen Pufferspeichereinrichtung. Gleiche oder funktionsgleiche Elemente sind entsprechend Figur 2 mit gleichen Bezugszeichen versehen.

Die Pufferspeicheranordnung BM in Figur 3 enthält eine Speicherverwaltungseinheit MMU, einen Speicher RAM, eine Synchronisiereinrichtung UIF sowie eine Takterzeugungseinrichtung CKG. Die Pufferspeicheranordnung BM ist zum einen mit dem Bus USB und zum anderen über den PD-Bus PDB mit der zentralen Recheneinheit CPU verbunden. Des weiteren ist über einen Phasenregelkreis PLL eine Oszillatoreinrichtung OSC an die Takterzeugungseinrichtung CKG der Pufferspeicheranordnung BM anschließbar.

Die Speicherverwaltungseinheit MMU enthält einen sogenannten Dual-Port-Manager DPM, eine SWAP-Einrichtung SWU sowie eine Registereinrichtung SFR. Des weiteren enthält die Speicherverwaltungseinheit MMU Mittel zur Adresserzeugung. Diese Mittel bestehen im vorliegenden Beispiel aus einem ersten Adressgenerator UAG und einem zweiten Adressgenerator CRG. Die Adressgeneratoren UAG, CAG bestehen in der einfachsten Ausführung aus einem Zähler und einem Zeiger. Im vorliegenden Beispiel steuert der erste Adressgenerator UAG einen ersten Schreib/Lesezeiger RWP0 und der zweite Adressgenerator CAG einen zweiten Schreib/Lesezeiger RWP1 an.

Der Speicher RAM wird vom Dual-Port-Manager DPM über den Adress-/Datenbus ADB angesteuert. Der Dual-Port-Manager DPM entscheidet dann, von welcher der beiden Seite die Adressen des Speichers RAM gelesen werden können.

Der Bus USB und die zentrale Recheneinheit CPU weisen typischerweise eine unterschiedliche Taktfrequenz und eine unterschiedliche Phasenlage auf. In diesem Fall ist es notwendig, den CPU-Takt und den USB-Takt miteinander zu synchronisieren. Daher ist typischerweise zwischen dem Bus USB und der Speicherverwaltungseinheit MMU eine Synchronisiereinrichtung UIF geschaltet. Die Synchronisiereinrichtung UIF synchronisiert das vom USB-Bus eingekoppelte Taktsignal mit dem Taktsignal der Speicherverwaltungseinheit MMU, welches der Taktfrequenz der zentralen Recheneinheit CPU entspricht. Zur Synchronisierung des USB-Taktes und des CPU-Taktes wird typischerweise in bekannter Weise ein sogenanntes Hand-Shake-Protokoll verwendet.

Es ist selbstverständlich auch möglich, die Synchronisiereinrichtung UIF zwischen der Speicherverwaltungseinheit MMU und der zentralen Recheneinheit CPU anzuordnen. Denkbar ist jedoch auch, daß die Taktfrequenzen und die Phasenlagen von USB-Takt und CPU-Takt gleich sind. In diesem Fall ist eine Synchronisierung natürlich nicht notwendig.

Wie in Figur 3 angedeutet, ist der Speicher RAM in eine erste Speicherseite P0 und eine zweite Speicherseite P1 aufgeteilt. Des weiteren ist ein signifikantes Bit vorgesehen, das sogenannte MSB-Bit (Most-Significant-Bit), welches eine Zuordnung zur ersten bzw. zur zweiten Speicherseite P0, P1 vornimmt. Ist das MSB-Bit beispielsweise MSB=0, dann ist die entsprechende Speicherseite P0 mit der der zentralen Recheneinheit CPU verbunden. Im Fall von MSB=1 ist die entsprechende Speicherseite P1 mit dem Bus USB verbunden.

In der vorliegenden Erfindung hat sowohl die erste als auch die zweite Speicherseite P0, P1 einen eigenen Adressgenerator UAG, CAG mit jeweils einem eigenen Schreib-/Lesezeiger RWP0, RWP1. Über einen derartigen Schreib/Lesezeiger RWP0, RWP1 ist es möglich, sowohl Daten aus dem Speicher RAM auszulesen als auch Daten in den Speicher RAM zu schreiben.

Des weiteren weist jede Speicherseite P0, P1, wie in Figur 3 angedeutet, eine gleiche Anzahl von Speicherplätzen SPP auf. Dabei gibt es im Speicher RAM jeweils genau zwei Speicherplätze SPP mit derselben Adresse, die sich lediglich durch das MSB-Bit voneinander unterscheiden. Die Gesamtzahl der unterschiedlichen Speicherplätze SPP im Speicher RAM hängt typischerweise ab von der Anzahl der Adressleitungen des Adress-/Datenbusses ADB. Bei acht Adressleitungen, d. h. bei einem 8-Bit Adressbus, weist somit der Speicher 256 maximal verschiedene Speicherplätze SPP auf. Die Gesamtzahl der Datenleitungen des Adress-/Datenbusses ADB bestimmt dann die in jedem Speicherplatz SPP ablegbare Datenmenge. Beispielsweise weist jeder Speicherplatz SPP unter Verwendung von acht Datenleitungen eine Datengröße von 32 Byte auf.

Erfindungsgemäß ist der Speicher RAM in mehrere Endpunkte EP unterteilt. Jeder Endpunkt EP kann dabei mehrere Speicherplätze SPP umfassen. Es ist jedoch auch möglich, daß ein Endpunkt EP von einem einzigen oder sogar von keinem Speicherplatz SPP belegt ist.

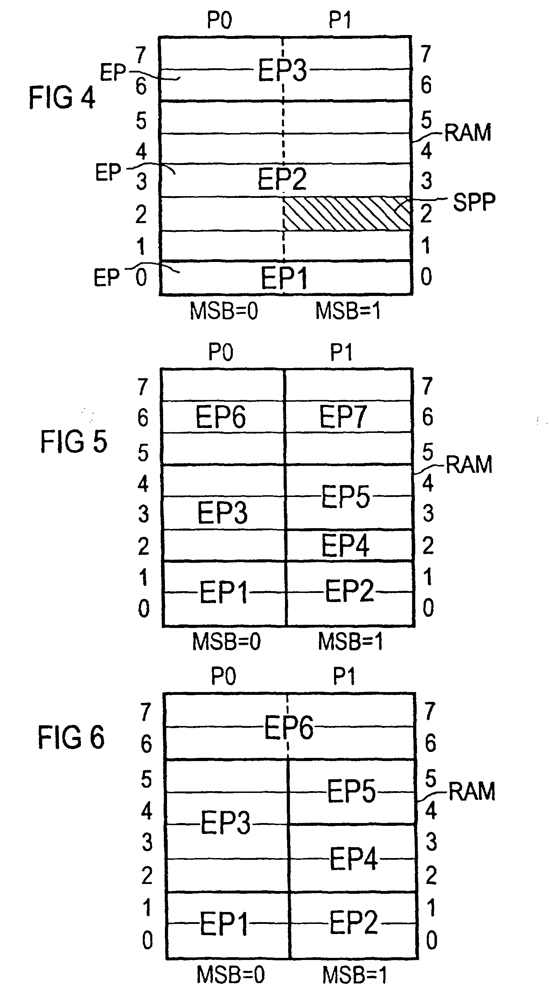

Die unterschiedlichen Betriebsmodi dieser Endpunkte EP werden nachfolgend anhand der Figuren 4 bis 6 genauer beschrieben.

Für das Beschreiben bzw. Auslesen von Daten aus den Endpunkten EP unterscheidet man grundsätzlich zwei verschiedene Modi: den sogenannten Single-Buffer-Mode und den Dual-Buffer-Mode. Dabei ist es möglich, die Endpunkte des Speichers RAM allein im Single-Buffer-Mode oder allein im Dual-Buffer-Mode zu betreiben. Zusätzlich ist es auch möglich, einen Teil der Endpunkte EP des Speichers RAM im Dual-Buffer-Mode zu betreiben während gleichzeitig die übrigen Endpunkte EP im Single-Buffer-Mode betrieben werden.

Nachfolgend wird zunächst der Aufbau derartiger im Dual-Buffer-Mode- bzw. im Single-Buffer-Mode betriebener Pufferspeicher anhand der Beispiele in den Figuren 4 bis 6 der Zeichnung näher erläutert. Gleiche und funktionsgleiche Elemente sind entsprechend der vorhergehenden Figuren mit gleichen Bezugszeichen versehen.

Figur 4 zeigt einen Speicher RAM, der ausschließlich im Dual-Buffer-Mode betrieben wird. Zur besseren Übersicht wurde hier auf die Darstellung von Schreib-/Lesezeigern RWP0, RWP1 verzichtet.

Der 4-Bit-Speicher RAM in Figur 4 weist 16 Speicherplätze SPP bzw. acht Speicherplatzpaare auf, die durch die Adressen 0 bis 7 gekennzeichnet sind. Der Speicherplatz SPP mit der Adresse 2 und MSB=1 ist hier exemplarisch schraffiert hervorgehoben. Zusammen mit dem ensprechenden Speicherplatz SPP mit der Adresse 2 und einem MSB=0 bilden diese Speicherplätze SPP ein Speicherplatzpaar. Jedes der Speicherplatzpaare besteht somit aus jeweils zwei Speicherplätzen SPP derselben Adresse, die sich nur durch das MSB-Bit unterscheiden.

Der Speicher RAM weist des weiteren drei Endpunkte EP1 - EP3 auf. Der Endpunkt EP1 besteht in Figur 4 aus einem einzigen Speicherplatzpaar der Adresse 0. Der Endpunkt EP2 besteht hier aus fünf Speicherplatzpaaren mit den Adressen 1 - 5, wobei 1 die Basisadresse ist und 5 die Endadresse angibt. Der Endpunkt EP3 wird hier durch zwei Speicherplatzpaare mit den Adressen 6 und 7 gebildet. Hierbei ist 6 die Basisadresse und 7 die Endadresse. Des weiteren ist in Figur 4 ein erster Schreib-/Lesezeiger RWP0 für die erste Speicherseite P0 und ein zweiter Schreib-/Lesezeiger RWP1 für die zweite Speicherseite P1 eingezeichnet. Im Dual-Buffer-Mode belegen somit die Endpunkte EP gleichzeitig Speicherplätze SPP der ersten Speicherseite P0 und der zweiten Speicherseite P1.

Figur 5 zeigt einen Speicher RAM, der ausschließlich im Single-Buffer-Mode betrieben wird. Der Speicher RAM in Figur 5 weist wie in Figur 4 ein 4-Bit-Speicher mit insgesamt acht Speicherplatzpaaren auf. Jedem Speicherplatzpaar sind zwei Speicherplätze SPP, die sich nur durch das MSB-Bit unterscheiden, zugeordnet. Der Single-Buffer-Mode-Speicher in Figur 5 weist sieben Endpunkte EP1 - EP7 auf. Jeder dieser Endpunkte EP1 - EP7 umfaßt für sich ausschließlich Speicherplätze SPP einer der beiden Speicherseiten P0, P1. Das bedeutet, jeder der Endpunkte EP1 - EP7 ist gekennzeichnet durch entweder MSB=0 oder MSB=1. Dabei können die unterschiedlichen Endpunkte EP1 - EP7 vollkommen unabhängig voneinander betrieben, d. h. beschrieben und ausgelesen werden.

Im vorliegenden Beispiel umfassen die Endpunkte EP1, EP2 jeweils zwei Speicherplätze SPP mit den Adressen 0 und 1 und unterscheiden sich lediglich durch das MSB-Bit. Die Endpunkte EP1, EP2 weisen die Basisadresse 0 und Endadresse 1 auf. Die Endpunkte EP6, EP7 umfassen jeweils drei Speicherplätze SPP mit den Adressen 5 - 7 mit der Basisadresse 5 und der Endadresse 7. Die Endpunkte EP6, EP7 unterscheiden sich ebenfalls durch das MSB-Bit. Wie in Figur 5 angedeutet, ist es auch möglich, daß ein Endpunkt EP3 der einen Speicherseite P0 in zwei oder mehr Endpunkten EP4, EP5 der anderen Speicherseite P1 seine Entsprechung findet. Im vorliegenden Beispiel umfaßt der Endpunkt EP3 die Adressen 2 - 4 der ersten Speicherseite P0, wobei die entsprechenden Adressen 2 - 4 der zweiten Speicherseite P1 durch den Endpunkt EP4 mit der Adresse 2 und den Endpunkt 5 mit den Adressen 3 - 4 bilden.

Die erfindungsgemäße Pufferspeicheranordnung BM ermöglicht es zudem, daß ein Teil der Endpunkte EP des Speicher RAM im Dual-Buffer-Mode und ein anderer Teil der Endpunkte EP gleichzeitig im Single-Buffer-Mode betrieben werden. Dieser Betriebsmodus ist in Figur 6 dargestellt.

Die Endpunkte EP1 und EP2 weisen die Adressen 0 und 1 auf. Der Endpunkt EP3 mit der Adresse 2 bis 5 der ersten Speicherseite P0 findet seine Entsprechung in den beiden Endpunkten EP4 und EP5 mit den Adressen 2 - 3 bzw. 4 bis 5 der zweiten Speicherseite P1. Diese Endpunkte EP1 - EP5 werden ausschließlich im Single-Buffer-Mode betrieben. Der Endpunkt EP6 mit den Speicherplatzpaaren der Adresse 6 und 7 wird dagegen ausschließlich im Dual-Buffer-Mode betrieben.

Nachfolgend wird die genaue Funktionsweise eines im Single-Buffer-Mode und im Dual-Buffer-Mode betriebenen Speichers RAM genauer erläutert.

Im Dual-Buffer-Mode kann ein Endpunkt EP von einem Datensender und einem Datensender gleichzeitig beschrieben und gelesen werden. Anschließend wird dieser Endpunkt EP, gesteuert durch das MSB-Bit der SWAP-Einrichtung SWU, umgeschaltet. Die jeweils andere Seite des Endpunktes EP kann dann von der zentralen Recheneinheit CPU und vom Bus USB wieder beschrieben bzw. ausgelesen werden. Das Umschalten erfolgt dabei voll automatisch.

Im sogenannten Single-Buffer-Mode läßt sich zunächst ein Endpunkt EP von einem Datensender beschreiben. Das bedeutet, die diesem Endpunkt EP entsprechenden Endpunkte EP oder Speicherplätze SPP der jeweils anderen Speicherseite P0, P1 bleiben in jedem Fall leer. Diese können beispielsweise für einen anderen Endpunkt EP genutzt werden. Im Single-Buffer-Mode unterscheidet man somit nicht zwischen der ersten und der zweiten Speicherseite P0, P1. Nach dem Umschalten durch die SWAP-Einrichtung SWU kann der gerade beschriebene Endpunkt EP wieder ausgelesen werden. Der Umschaltmechanismus erfolgt ähnlich wie im Dual-Buffer-Mode voll automatisch.

Im Single-Buffer-Mode und im Dual-Buffer-Mode kann die zentrale Recheneinheit CPU und der Bus USB sowohl als Datensender als auch als Datenempfänger fungieren.

Sowohl im Dual-Buffer-Mode als auch im Single-Buffer-Mode läßt sich jeder der Endpunkte EP völlig unabhängig von den übrigen Endpunkten EP des Speichers RAM betreiben. Dadurch ist es möglich gezielt Daten in den Speicher RAM zu schreiben und diese Daten gezielt wieder auszulesen, ohne die übrigen Daten, die sich in diesem Zeitraum nicht verändert haben, ebenfalls auslesen zu müssen. Auf diese Weise ist eine Kanalisierung und Strukturierung des Datentransfers möglich. Es können so sehr schnell und gezielt einzelne Daten von einem Datensender zu einem Datenempfänger transferiert werden. Dadurch läßt sich die Leistungsfähigkeit bzw. die Schnelligkeit der Pufferspeicheranordnung erheblich steigern.

Dieses Konzept findet bevorzugte Anwendung, wenn beispielsweise eine Maske, ein Formular, oder ähnliches vom Datensender zum Datenempfänger übertragen werden soll. Bei einer derartigen Anwendung verändern sich lediglich einzelne Daten (z. B. bei einem Formular), die dann aber sehr schnell ausgelesen werden müssen. Die übrigen Daten des Formulars, die sich typischerweise sehr selten ändern, müssen nicht jedesmal ausgelesen werden.

Eine spezielle und besonders vorteilhafte Anwendungsmöglichkeit findet die Erfindung auch bei der Tastatursteuerung bzw. der Maussteuerung eines PC's. Hier verändern sich im Vergleich zur gesamten Datenmenge immer nur einzelne Parameter. Zudem ändern sich diese Parameter vergleichsweise selten. Findet jedoch eine solche Veränderung statt, dann müssen die veränderten Daten möglichst schnell weitergeleitet werden. Wird bei jeder Änderung eines Parameters dieses Systems die gesamte Datenmenge übertragen, dann muß entweder ein verhältnismäßig großer Pufferspeicher bereitgestellt werden oder das System weist eine erhebliche und unerwünschte Trägheit auf. Diese Nachteile werden jedoch durch die erfindungsgemäße Speicherarchitektur vermieden.

Wird ein Endpunkt im Dual-Buffer-Mode betrieben, dann wird die entsprechende Speicherseite automatisch umgeschaltet, d.h. das MSB-Bit wird entsprechend der Richtung des Datentransfers geändert.

Der im Single-Buffer-Mode betriebene Speicher RAM verhält sich ähnlich wie der im Dual-Buffer-Mode betriebene Speicher RAM. Im Single-Buffer-Mode wird jedoch das MSB-Bit nicht verändert. Im Single-Buffer-Mode-Betrieb gibt es im Gegensatz zum Dual-Buffer-Mode-Betrieb nicht die Möglichkeit, daß beide Speicherseiten P0, P1 voll sind. Ein Endpunkt EP wird als voll deklariert, wenn eine der gemeinsam benutzten Speicherseite P0, P1 voll ist. Ein Endpunkt EP wird als leer deklariert, wenn alle Speicherplätze SPP der gemeinsam benutzten Speicherseite P0, P1 leer sind. Für diesen Fall eines leeren Speichers RAM kann einer der beiden Endpunkte EP der Speicherseiten P0, P1 beschrieben werden. Der Speicher RAM wird dann wieder als voll deklariert.

Die Richtung eines Datentransfers wird über ein sogenanntes Richtungsbit bestimmt. Das Richtungsbit wird typischerweise vom Datensender vorgegeben. Das Richtungsbit legt also fest, welcher der beiden Teilnehmer, d. h. die zentrale Rechenheit CPU oder der Bus USB, der Datensender ist und welcher der Datenempfänger ist.

Die Zahl der Endpunkte EP im Speicher RAM ist einstellbar. Dabei sind die Basisadressen jedes Endpunktes EP in der Registereinrichtung SFR abgelegt. Die tatsächliche Zugriffsadresse jedes Endpunktes EP wird durch Addition der Basisadresse, des MSB-Bits und des Offsets, der durch den entsprechenden Zähler generiert wird, erzeugt.

In einer vorteilhaften Weiterbildung lassen sich die Adressen durch eine einfache ODER-Verknüpfung realisieren. Jedoch muß hier die Basisadresse ein Vielfaches von 2ⁿ sein und die Offsetadresse muß einen Wert zwischen 0 und 2ⁿ -1 annehmen. In diesem Fall wird sichergestellt, daß keine Bitstelle in beiden Summanden dieser Adressen mit 1 belegt ist.

Die Endpunkte EP weisen typischerweise eine Größe von 8, 16, 32, 64 Byte auf. Jedoch sind auch kleinere Endpunkte EP in der Größenordnung 0, 1, 2, 4 Byte denkbar. Die Datengröße aller Endpunkte EP zusammen darf selbstverständlich nicht die Datengröße des gesamten Speichers RAM übersteigen.

Die maximale Datengröße eines Endpunktes EP ist festgelegt durch dessen Basisadresse und dessen Endadresse. Jedoch ist es auch möglich, eine geringere Datenmenge innerhalb eines Endpunktes EP abzulegen. Die durch die Basisadresse und Endadresse festgelegte maximale Länge eines Endpunktes EP sowie die tatsächliche Größe der in dem Endpunkt EP abgespeicherten Datenmenge ist in einem Längenregister abgelegt. Das Längenregister ist Teil der Registereinrichtung SFR.

Jeder der Endpunkte EP kann über das sogenannte MSB-Bit vertauscht werden. Durch dieses Vertauschen wird auch die Längeninformation und die Adressinformation der jeweiligen Endpunkte EP vertauscht. Die Basisadressen der jeweiligen Endpunkte EP sind dabei in einem sogenannten Basisadreßregister innerhalb der Registereinrichtung SFR abgelegt.

Die SWAP-Einrichtung SWU sowie die Registereinrichtung SFR werden gesteuert durch die zentrale Recheneinheit CPU. Die SWAP-Einrichtung SWU enthält zusätzlich eine Logikschaltung, die erkennt, ob ein Endpunkt EP voll ist oder leer ist.

Ein weiteres signifikantes Bit, das sogenannte Lenght-Significant-Bit (LSB) oder LSB-Bit, welches hier im Längenregister abgelegt ist, gibt die tatsächliche Länge der in den jeweiligen Endpunkten bzw. Speicherplätzen abgespeicherten Datenmenge an. Die in dem Längenregister angeordnete Logik weist eine Endstandserkennung auf, die erkennt, ob die Endadresse des entsprechenden Endpunktes EP erreicht wurde und somit der jeweilige Endpunkt EP voll ist.

Da Längenregister üblicherweise sehr groß ausgebildet sind, können diese auch monolithisch im Speicher RAM angeordnet sein. Auf diese Weise ist es möglich, durch Einsparung dieses verhältnismäßig großen Längenregisters zusätzlich Chipfläche zu sparen.

Besonders vorteilhaft ist die vorliegende Erfindung, wenn die Pufferspeicheranordnung in einem Mikrocomputer oder einem Mikroprozessor integriert ist. Insbesondere die Anwendung in einem USB-Modul erweist sich auch als äußerst günstig.

Es ist jedoch auch denkbar die erfindungsgemäße Pufferspeicheranordnung für Datentransfers in einem Kommunikationsnetz, einem Personal Computer, oder ähnlichem zu verwenden.

Mit der vorliegenden Pufferspeicherarchitektur ist es somit möglich, daß der Speicher RAM die zu transferierenden Daten selbständig verwaltet. Die beiden Speicherseiten P0, P1 dienen dabei zur Entkopplung von Datensender und Datenempfänger, d. h. im vorliegenden Ausführungsbeispiel zur Entkopplung der zentralen Recheneinheit CPU und dem Bus USB. Beide Speicherseiten P0, P1 sind somit für den Anwender zwar virtuell sichtbar, jedoch ist für den Datentransfer von Datensender zu Datenempfänger immer nur eine der Speicherseiten P0, P1 ansprechbar. Auf diese Weise wird eine Überlappung der Schreibzyklen vermieden, indem schnell aufeinanderfolgende Daten des Datensenders in getrennte Bereiche des Speichers RAM abgelegt werden. Somit lassen sich die zu transferierenden Daten vom Datensender "langsam" in den Speicher RAM schreiben, da der nächste nachfolgende "schnelle" Schreibbefehl in einen anderen Teil des Speichers RAM geht. Dieser Vorgang kann selbstverständlich auch umgekehrt ablaufen.

Dadurch ist es in vorteilhafter Weise möglich, daß Datensender und Datenempfänger mit unterschiedlich hohen Taktfrequenzen die Daten in den Speicher RAM einschreiben bzw auslesen. Die Adressen der Speicherplätze SPP des Speichers RAM können in bekannter Weise wie bei einem Ringpufferspeicher adressiert werden. Besonders vorteilhaft ist es jedoch, wenn der Adressgenerator applikationsspezifisch und somit nicht gebunden an eine Ringform, auf die Speicheradressen des Speichers RAM umschaltet.

Darüber hinaus dienen die beiden Speicherseiten P0, P1 auch zur Entkopplung des typischerweise komplett asynchronen Datentransfers zwischen Datensender und Datenempfänger.

### Bezugszeichenliste

- ADB =: Adress-/Datenbus
- BM =: Pufferspeicheranordnung
- CAG =: zweiter Adressgenerator
- CKG =: Takterzeugungseinrichtung
- CPU =: zentrale Recheneinheit
- DPM =: Dual-Port-Manager
- EP, EP1 - EP5 =: Endpunkte
- MMU =: Speicherverwaltungseinheit
- MSB =: signifikantes Bit, most significant bit
- OSC =: Oszillatoreinrichtung
- P0 =: erste Speicherseite
- P1 =: zweite Speicherseite
- PDB =: Pheripheral Data Bus
- PLL =: Phasenregelkreis
- RAM =: Speicher
- RP =: Lesezeiger
- RWP =: Lese/-Schreibzeiger
- SFR =: Registereinrichtung
- SPP =: Speicherplatz
- SWU =: SWAP-Einrichtung
- UAG =: erster Adressgenerator
- UIF =: Sychronisiereinrichtung
- USB =: Bus
- WP =: Schreibzeiger
- XDB =: External Data Bus

## Patentansprüche

1. Pufferspeicheranordnung,
- die zur Datenkommunikation zwischen einem Datensender und einem Datenempfänger angeordnet ist und die mit diesen über Signalleitungen gekoppelt ist,
- die zur Datenpufferung mindestens einen Speicher (RAM) enthält und
- die eine Speicherverwaltungseinrichtung (MMU) aufweist, die über einen Adress-/Datenbus (ADB) das Auslesen und das Beschreiben des Speichers (RAM) steuert,
wobei
- der Speicher (RAM) auf einem Adressraum abbildbar ist, der genau halb so groß ist wie der Speicher (RAM), wobei die erste Hälfte des Speichers (RAM) eine erste Speicherseite (P0) und die zweite Hälfte des Speichers (RAM) eine zweite Speicherseite (P1) definiert und wobei jeder Adresse im Adressraum ganau ein Speicherplatz (SPP) auf jeder der Speicherseiten (P0, P1) zugeordnet ist, und
- die Speicherverwaltungseinheit (MMU) ein signifikantes Bit (MSB) erzeugt, welches jeweils die zwei Speicherplätze (SPP) mit derselben Adresse dem Adressraum der ersten und dem Adressraum der zweiten Speicherseite (P0, P1) zuordnet,
**dadurch gekennzeichnet,**
**daß** der Speicher (RAM) mindestens einen Endpunkt (EP) aufweist, wobei
- jedem Endpunkt (EP) eine Basisadresse und eine Endadresse zugeordnet ist und
- jeder Endpunkt (EP) entweder nur Speicherplätze (SPP) der ersten Speicherseite (P0) oder nur Speicherplätze (SPP) der zweiten Speicherseite (P1) oder Speicherplätze (SPP) beider Speicherseiten (P0, P1) mit den selben Adressen belegen kann, und
**daß** die Endpunkte (EP) einer Speicherseite (P0, P1) unabhängig vom Inhalt der übrigen Endpunkte (EP) derselben Speicherseite (P0, P1) einzeln und in beliebiger Reihenfolge beschreibbar oder auslesbar sind.

2. Pufferspeicheranordnung nach Anspruch 1,
**dadurch gekennzeichnet, daß** ein Bus (USB) mit einer Vielzahl von Busleitungen und eine zentrale Recheneinheit (CPU) vorgesehen sind, die jeweils sowohl als Datensender als auch als Datenempfänger betreibbar sind.

3. Pufferspeicheranordnung nach Anspruch 1 oder 2,
**dadurch gekennzeichnet, daß** in jedem der Endpunkte (EP) mindestens ein Datenpaket abspeicherbar ist, wobei jedes Datenpaket mindestens die Datengröße eines einzelnen Speicherplatzes (SPP) aufweist.

4. Pufferspeicheranordnung nach einem der vorhergehenden Ansprüche,
**dadurch gekennzeichnet, daß** die Endadresse eines Endpunktes (EP) durch die vom Datensender gesendete maximale Datengröße eines Datenpakets festgelegt ist.

5. Pufferspeicheranordnung nach einem der vorhergehenden Ansprüche,
**dadurch gekennzeichnet, daß** die Speicherverwaltungseinheit (MMU) mindestens eines der nachfolgenden Elemente aufweist:
- einen ersten Adressgenerator (UAG) zur Erzeugung der Adressen der ersten Speicherseite (P0),
- einen ersten Schreib/-Lesezeiger (RWP0) zum Beschreiben/Auslesen von Daten aus Speicherplätzen der ersten Speicherseite (P0),
- einen zweiten Adressgenerator (CAG) zur Erzeugung der Adressen der zweiten Speicherseite (P1),
- einen zweiten Schreib/-Lesezeiger (RWP1) zum Beschreiben/Auslesen von Daten aus Speicherplätzen der zweiten Speicherseite (P1),
- eine SWAP-Einrichtung (SWU), die das Umschalten zwischen der ersten und der zweiten Speicherseite (P0, P1) steuert.

6. Pufferspeicheranordnung nach einem der vorhergehenden Ansprüche,
**dadurch gekennzeichnet, daß** mindestens eine Registereinrichtung (SFR) vorgesehen ist, in der die Basisadressen der Endpunkte (EP) abgelegt sind.

7. Pufferspeicheranordnung nach einem der vorhergehenden Ansprüche,
**dadurch gekennzeichnet, daß** der Datensender und/oder der Datenempfänger ein Richtungsbit erzeugt, welches die Richtung des Datentransfers festlegt.

8. Pufferspeicheranordnung nach einem der vorhergehenden Ansprüche,
**dadurch gekennzeichnet, daß** die Speicherverwaltungseinrichtung (MMU) Mittel enthält, die erkennen, ob ein Endpunkt (EP) leer ist oder voll ist.

9. Pufferspeicheranordnung nach einem der vorhergehenden Ansprüche,
**dadurch gekennzeichnet, daß** jede Adresse innerhalb des Adreßraums eines Endpunktes (EP) beliebig einstellbar ist, um beschrieben oder ausgelesen werden zu können.

10. Pufferspeicheranordnung nach einem der Ansprüche 2 bis 9,
**dadurch gekennzeichnet, daß** der Bus (USB) über weitere Signalleitungen eine weitere zentrale Recheneinheit und/oder einen Coprozessor und/oder mindestens eine Pheripherieeinheit an die Pufferspeicheranordnung anbindet.

11. Pufferspeicheranordnung nach einem der vorhergehenden Ansprüche,
**dadurch gekennzeichnet, daß** die Pufferspeicheranordnung (RAM) eine Synchronisiereinrichtung (UIF) aufweist, die die Taktsignale des Datensenders und des Datenempfängers miteinander synchronisiert.

12. Verfahren zum Betreiben einer Pufferspeicheranordnung nach einem der Ansprüche 5 bis 11,
**gekennzeichnet durch** eine erste Konfiguration,
- bei der jeder Endpunkt (EP), der ausschließlich Speicherplätze (SPP) der ersten Speicherseite (P0, P1) aufweist, von dem Datensender beschreibbar ist,
- die SWAP-Einrichtung (SWU) mittels des signifikanten Bits (MSB) die Zuordnung der beschriebenen Endpunkte (EP) von Datensender auf Datenempfänger vertauscht und
- die gerade beschriebenen und bezüglich des signifikanten Bits (MSB) vertauschten Endpunkte (EP) von dem Datenempfänger auslesbar ist.

13. Verfahren zum Betreiben einer Pufferspeicheranordnung nach einem der Ansprüche 5 bis 12,
**gekennzeichnet durch** eine zweite Konfiguration,
- bei der jeder Endpunkt (EP), der ausschließlich Speicherplätze (SPP) beider Speicherseiten (P0, P1) mit jeweils gleichen Adressen aufweist, gleichzeitig von dem Datensender beschreibbar ist und vom Datensender auslesbar ist,
- die SWAP-Einrichtung (SWU) mittels des signifikanten Bits (MSB) die Zuordnung des gerade beschriebenen Endpunktes (EP) von Datensender auf Datenempfänger vertauscht und
- diese Endpunkte (EP) wieder von dem Datensender beschreibbar und vom Datenempfänger auslesbar ist.

14. Pufferspeicheranordnung nach einem der Ansprüche 1 bis 11,
**dadurch gekennzeichnet, daß** die Pufferspeicheranordnung in der ersten Konfiguration oder in der zweiten Konfiguration betreibbar sind oder sowohl in der ersten und der zweiten Konfiguration betreibbar sind.

15. USB-Modul mit mindestens einer Pufferspeicheranordnung nach einem der Ansprüche 1-11.

16. Microcontroller mit einer integrierten Pufferspeicheranordnung nach einem der Ansprüche 1-11.

## Claims

1. Buffer memory arrangement,
- which is arranged for the purpose of data communication between a data transmitter and a data receiver and which is coupled thereto via signal lines,
- which contains at least one memory (RAM) for the purpose of data buffering, and
- which has a memory management unit (MMU), which controls reading from and writing to the memory (RAM) via an address/data bus (ADB),
wherein
- the memory (RAM) can be mapped onto an address space which is exactly half as large as the memory (RAM), the first half of the memory (RAM) defining a first memory page (P0) and the second half of the memory (RAM) defining a second memory page (P1), and each address in the address space being assigned exactly one memory location (SPP) on each of the memory pages (P0, P1), and
- the memory management unit (MMU) generates a significant bit (MSB) which assigns in each case the two memory locations (SPP) having the same address to the address space of the first memory page (P0) and to the address space of the second memory page (P1),
**characterized in**
**that** the memory (RAM) has at least one end point (EP),
- each end point (EP) being assigned a base address and an end address, and
- each end point (EP) can occupy either only memory locations (SPP) of the first memory page (P0) or only memory locations (SPP) of the second memory page (P1) or memory locations (SPP) of both memory pages (P0, P1) with the same addresses, and
**that** it is possible to write to or read from the end points (EP) of a memory page (P0, P1) individually and in any order, independently of the content of the remaining end points (EP) of the same memory page (P0, P1).

2. Buffer memory arrangement according to Claim 1,
**characterized in that** a bus (USB) having a multiplicity of bus lines and a central processing unit (CPU) are provided, which can each be operated both as data transmitter and as data receiver.

3. Buffer memory arrangement according to Claim 1 or 2,
**characterized in that** at least one data packet can be stored in each of the end points (EP), each data packet having at least the data size of an individual memory location (SPP).

4. Buffer memory arrangement according to one of the preceding claims,
**characterized in that** the end address of an end point (EP) is defined by the maximum data packet size transmitted by the data transmitter.

5. Buffer memory arrangement according to one of the preceding claims,
**characterized in that** the memory arrangement unit (MMU) has at least one of the following elements:
- a first address generator (UAG) for generating the addresses of the first memory page (P0),
- a first read/write pointer (RWP0) for reading/writing data from/to memory locations of the first memory page (P0),
- a second address generator (CAG) for generating the addresses of the second memory page (P1),
- a second read/write pointer (RWP1) for reading/writing data from/to memory locations of the second memory page (P1),
- a SWAP unit (SWU), which controls the changeover between the first and second memory pages (P0, P1).

6. Buffer memory arrangement according to one of the preceding claims,
**characterized in that** at least one register device (SFR) is provided, in which the base addresses of the end points (EP) are stored.

7. Buffer memory arrangement according to one of the preceding claims,
**characterized in that** the data transmitter and/or the data receiver generate/generates a direction bit which defines the direction of the data transfer.

8. Buffer memory arrangement according to one of the preceding claims,
**characterized in that** the memory management unit (MMU) contains means which identify whether an end point (EP) is empty or full.

9. Buffer memory arrangement according to one of the preceding claims,
**characterized in that** each address within the address space of an end point (EP) can be set as desired so that it can be written to or read from.

10. Buffer memory arrangement according to one of Claims 2 to 9,
**characterized in that** the bus (USB) connects a further central processing unit and/or a coprocessor and/or at least one peripheral unit to the buffer memory arrangement via further signal lines.

11. Buffer memory arrangement according to one of the preceding claims,
**characterized in that** the buffer memory arrangement (RAM) has a synchronization device (UIF), which synchronizes the clock signals of the data transmitter and data receiver with one another.

12. Method for operating a buffer memory arrangement according to one of Claims 5 to 11,
**characterized by** a first configuration
- in which each end point (EP) which has exclusively memory locations (SPP) of the first memory page (P0, P1) can be written to by the data transmitter,
- the SWAP unit (SWU) uses the significant bit (MSB) to interchange the assignment of the end points (EP) written to from data transmitter to data receiver, and
- the end points (EP) that have just been written to and interchange with regard to the significant bit (MSB) can be read by the data receiver.

13. Method for operating a buffer memory arrangement according to one of Claims 5 to 12,
**characterized by** a second configuration,
- in which each end point (EP) which has exclusively memory locations (SBB) of both memory pages (P0, P1) with respectively identical addresses can simultaneously be written to by the data transmitter and read from by the data transmitter,
- the SWAP unit (SWU) uses the significant bit (MSB) to interchange the assignment of the end point (EP) currently written to from data transmitter to date receiver, and
- these end points (EP) can again be written to by the data transmitter and read from by the data receiver.

14. Buffer memory arrangement according to one of Claims 1 to 11,
**characterized in that** the buffer memory arrangement can be operated in the first configuration or in the second configuration or can be operated both in the first and in the second configuration.

15. USB module having at least one buffer memory arrangement according to one of Claims 1 to 11.

16. Microcontroller having an integrated buffer memory arrangement according to one of Claims 1-11.

## Revendications

1. Dispositif de mémoire tampon
- qui est conçu pour la communication des données entre un émetteur de données et un récepteur de données et est couplé avec ceux-ci par des lignes de signaux,
- qui contient pour la mémorisation temporaire des données au moins une mémoire (RAM) et
- qui possède une unité de gestion de mémoire (MMU) qui contrôle via un bus d'adresses/de données (ADB) la lecture et l'écriture dans la mémoire (RAM),
dans lequel
- la mémoire (RAM) peut être représentée sur un espace d'adresses qui a exactement la moitié de la taille de la mémoire (RAM), la première moitié de la mémoire (RAM) définissant un premier côté de mémoire (P0) et la deuxième moitié de la mémoire (RAM) un deuxième côté de mémoire (P1) et chaque adresse dans l'espace d'adresses étant associée précisément à un emplacement de mémoire (SPP) sur chacun des côtés de mémoire (P0, P1), et
- l'unité de gestion de mémoire (MMU) génère un bit significatif (MSB) qui associe chacun des deux emplacements de mémoire (SPP) dotés de la même adresse à l'espace d'adresses du premier et du deuxième côté de mémoire (P0, P1),
**caractérisé en ce que** la mémoire (RAM) possède au moins un point final (EP),
- à chaque point final (EP) étant associées une adresse de base et une adresse finale et
- chaque point final (EP) pouvant occuper soit uniquement des emplacements de mémoire (SPP) du premier côté de mémoire (P0), soit uniquement des emplacements de mémoire (SPP) du deuxième côté de mémoire (P1), soit des emplacements de mémoire (SPP) des deux côtés de mémoire (P0, P1) avec les mêmes adresses, et
**en ce que** les points finaux (EP) d'un côté de mémoire (P0, P1) peuvent être remplis et lus indépendamment du contenu des autres points finaux (EP) du même côté de mémoire (P0, P1), individuellement et dans n'importe quel ordre.

2. Dispositif de mémoire tampon selon la revendication 1, **caractérisé en ce qu'**il est prévu un bus (USB) doté d'une multitude de lignes de bus et une unité centrale (CPU) qui peuvent être exploités chacun aussi bien comme émetteur de données que comme récepteur de données.

3. Dispositif de mémoire tampon selon la revendication 1 ou 2, **caractérisé en ce que** dans chacun des points finaux (EP) peut être mémorisé au moins un paquet de données, chaque paquet de données possédant au moins le volume de données d'un emplacement de mémoire (SPP).

4. Dispositif de mémoire tampon selon l'une quelconque des revendications précédentes, **caractérisé en ce que** l'adresse finale d'un point final (EP) est déterminée par la quantité de données maximale d'un paquet de données émise par l'émetteur de données.

5. Dispositif de mémoire tampon selon l'une quelconque des revendications précédentes, **caractérisé en ce que** l'unité de gestion de mémoire (MMU) possède au moins un des éléments suivants:
- un premier générateur d'adresses (UAG) pour générer les adresses du premier côté de mémoire (P0),
- un premier pointeur d'écriture/lecture (RWP0) pour écrire/lire des données dans des emplacements de mémoire du premier côté de mémoire (P0),
- un deuxième générateur d'adresses (CAG) pour générer les adresses du deuxième côté de mémoire (P1),
- un deuxième pointeur d'écriture/lecture (RWP1) pour écrire/lire des données dans des emplacements de mémoire du deuxième côté de mémoire (P1),
- une unité SWAP (SWU) qui contrôle la commutation entre le premier et le deuxième côté de mémoire (P0, P1).

6. Dispositif de mémoire tampon selon l'une quelconque des revendications précédentes, **caractérisé en ce qu'**il est prévu au moins une unité de registres (SFR) dans laquelle les adresses de base des points finaux (EP) sont enregistrées.

7. Dispositif de mémoire tampon selon l'une quelconque des revendications précédentes, **caractérisé en ce que** l'émetteur de données et/ou le récepteur de données génère(nt) un bit de direction qui détermine la direction du transfert de données.

8. Dispositif de mémoire tampon selon l'une quelconque des revendications précédentes, **caractérisé en ce que** l'unité de gestion de mémoire (MMU) contient des moyens qui détectent si un point final (EP) est vide ou plein.

9. Dispositif de mémoire tampon selon l'une quelconque des revendications précédentes, **caractérisé en ce que** chaque adresse à l'intérieur de l'espace d'adresses d'un point final (EP) peut être réglée au choix pour pouvoir être écrite ou lue.

10. Dispositif de mémoire tampon selon l'une quelconque des revendications 2 à 9, **caractérisé en ce que** le bus (USB) relie par d'autres lignes de signaux une autre unité centrale et/ou un coprocesseur et/ou au moins une unité périphérique au dispositif de mémoire tampon.

11. Dispositif de mémoire tampon selon l'une quelconque des revendications précédentes, **caractérisé en ce que** le dispositif de mémoire tampon (RAM) possède un dispositif de synchronisation (UIF) qui synchronise entre eux les signaux d'horloge de l'émetteur de données et du récepteur de données.

12. Procédé d'exploitation d'un dispositif de mémoire selon l'une quelconque des revendications 5 à 11, **caractérisé par** une première forme de réalisation
- dans laquelle chaque point final (EP) qui possède exclusivement des emplacements de mémoire (SPP) du premier côté de mémoire (P0, P1) peut être enregistré par l'émetteur de données,
- l'unité SWAP (SWU) permute au moyen du bit le plus significatif (MSB) l'affectation des points finaux (EP) enregistrés de l'émetteur de données au récepteur de données et
- les points finaux (EP) déjà enregistrés et permutés avec le bit le plus significatif (MSB) peuvent être lus par le récepteur de données.

13. Procédé d'exploitation d'un dispositif de mémoire selon l'une quelconque des revendications 5 à 12, **caractérisé par** une deuxième forme de réalisation
- dans laquelle chaque point final (EP) qui possède exclusivement des emplacements de mémoire (SPP) des deux côtés de mémoire (P0, P1) portant les mêmes adresses peut être en même temps enregistré par l'émetteur de données et lu par le récepteur de données,
- l'unité SWAP (SWU) permute au moyen du bit le plus significatif (MSB) l'affectation des points finaux (EP) déjà enregistrés de l'émetteur de données au récepteur de données et
- ces points finaux (EP) peuvent être à nouveau enregistrés par l'émetteur de données et lus par le récepteur de données.

14. Dispositif de mémoire tampon selon l'une quelconque des revendications 1 à 11, **caractérisé en ce que** le dispositif de mémoire tampon peut être exploité dans la première forme de réalisation ou dans la deuxième forme de réalisation, aussi bien que dans la première et la deuxième forme de réalisation.

15. Module USB avec au moins un dispositif de mémoire tampon selon l'une quelconque des revendications 1 à 11. Microcontrôleur avec un dispositif de mémoire tampon intégré selon l'une quelconque des revendications 1 à 11.

16. Microcontrôleur avec un dispositif de mémoire tampon intégré selon l'une quelconque des revendications 1 à 11.
